# EUROPÄISCHE PATENTSCHRIFT

(11) **EP 3 983 689 B1**
(45) Veröffentlichungstag und Bekanntmachung des Hinweises auf die Patenterteilung: **29.03.2023**
(21) Anmeldenummer: 20730968.3
(22) Anmeldetag: 06.05.2020
(51) Int. Cl.: F16C 19/50, F16C 33/58, F16C 35/06, F16C 35/063, F04B 1/2085

(54) **SCHWENKWIEGENLAGERUNG UND VERFAHREN ZUR HERSTELLUNG EINER SCHWENKWIEGENLAGERUNG**
PIVOT CRADLE BEARING AND METHOD FOR PRODUCING A PIVOT CRADLE BEARING
SUPPORT DE PALIER À BERCEAUX PIVOTANTS ET PROCÉDÉ DE FABRICATION D'UN SUPPORT DE PALIER À BERCEAUX PIVOTANTS

(30) Priorität: 14.06.2019 DE 102019116250
(43) Veröffentlichungstag der Anmeldung: 20.04.2022
(73) Patentinhaber: Schaeffler Technologies AG & Co. KG, 91074 Herzogenaurach (DE)
(72) Erfinder: KRAMAR, Vasyl, 97508 Grettstadt (DE)
(86) Internationale Anmeldenummer: PCT/DE2020/100378
(87) Internationale Veröffentlichungsnummer: WO 2020/249153

(56) Entgegenhaltungen:
- DE-A1-102005 034 739
- DE-A1-102010 032 651
- DE-A1-102013 218 203
- JP-A- 2002 349 555
- JP-A- 2009 047 217

## Beschreibung

Die Erfindung betrifft eine Schwenkwiegenlagerung nach dem Oberbegriff des Anspruchs 1. Ebenso betrifft die Erfindung ein Verfahren zur Herstellung einer Schwenkwiegenlagerung.

Eine gattungsgemäße Schwenkwiegenlagerung ist beispielsweise aus der DE 10 2005 034 739 A1 bekannt. Sie umfasst einen Schwenkhebel, das heißt ein Schwenkelement, sowie ein Gehäuse, in dem der Schwenkhebel gelagert ist. In das Gehäuse ist eine Lagerschale eingesetzt, welche im Fall der DE 10 2005 034 739 A1 als äußeres Ringsegment bezeichnet ist. Eine weitere Lagerschale ist auf dem Schwenkhebel gehalten. Zwischen den Lagerschalen rollen Wälzkörper ab, die als Nadeln oder Rollen ausgeführt sind. Die innere, am Schwenkhebel gehaltene, im Wesentlichen die Form eines gebogenen Streifens aufweisende Lagerschale ist an ihren Enden in Form von in Richtung zur Schwenkachse gerichteten Vorsprüngen umgebogen und damit formschlüssig am Schwenkhebel gehalten, das heißt gegen Verdrehung gesichert.

Eine weitere Schwenkwiegenlagerung, welche die Merkmale nach dem Oberbegriff des Anspruchs 1 aufweist, ist in der EP 1 886 035 B1 beschrieben. In diesem Fall ist als Schwenkelement eine Schrägscheibe vorgesehen. Die Schrägscheibe ist Teil einer hydraulischen Axialkolbenmaschine veränderlichen Durchsatzvolumens. Die bekannte, als Schrägscheiben-Schwenklager ausgebildete Schwenkwiegenlagerung umfasst Wälzkörper, die in einem Käfig geführt sind, wobei eine Käfigsteuerung in Wälzlager-Segmente des Schwenklagers integriert ist. Die Käfigsteuerung verhindert, dass der Käfig aus seiner im Schwenklager günstigsten Lage verrutscht.

Weiterhin offenbaren die Druckschriften JP 2009 047217 A und DE 10 2010 032651 A1 Schwenkwiegenlagerungen, bei denen eine äußere Lagerschale am Gehäuse befestigt wird.

Aus der Druckschrift ist zudem eine Schwenkwiegenlagerung bekannt, bei der Auch die Druckschrift DE 10 2013 218203 A1 zeigt eine Schwenkwiegenlagerung mit einer Lagerschale, die am Gehäuse befestigt wird. Hier wird die Lagerschale mittels eines Niets am Gehäuse befestigt.

Der Erfindung liegt die Aufgabe zugrunde, eine Schwenkwiegenlagerung gegenüber dem genannten Stand der Technik insbesondere unter fertigungstechnischen Aspekten weiterzuentwickeln.

Diese Aufgabe wird erfindungsgemäß gelöst durch eine Schwenkwiegenlagerung mit den Merkmalen des Anspruchs 1. Ebenso wird die Aufgabe gelöst durch ein Verfahren zur Herstellung einer Schwenkwiegenlagerung gemäß Anspruch 9. Im Folgenden im Zusammenhang mit dem Herstellungsverfahren erläuterte Ausgestaltungen und Vorteile der Erfindung gelten sinngemäß auch für Vorrichtung, das heißt Schwenkwiegenlagerung, und umgekehrt.

Die Schwenkwiegenlagerung umfasst in an sich bekannter Grundkonzeption ein Schwenkelement, welches in einem Gehäuse schwenkbar gelagert ist, wobei eine innere Lagerschale, auf der Wälzkörper abrollen, auf dem Schwenkelement gehalten ist. Erfindungsgemäß ist die innere Lagerschale mit Nieten am Schwenkelement in Umfangsrichtung der Lagerschale, das heißt in Schwenkrichtung, formschlüssig gehalten. Trotz des gegebenen Formschlusses kann die Lagerschale zerstörungsfrei vom Schwenkelement abnehmbar sein. In jedem Fall ist eine Ausführung des Ringsegments, das heißt der Lagerschale, als Verdrehsicherung bei der Schwenkwiegenlagerung gegeben.

Die Nietverbindung ist selbst bei Anwendungen, in denen sehr hohe Kräfte zwischen dem Schwenkelement und dem Gehäuse übertragen werden, zur dauerhaft stabilen Halterung der inneren Lagerschale auf dem Schwenkelement geeignet. Bei dem Schwenkelement handelt es sich beispielsweise um einen Schwenkhebel oder um eine Schwenkscheibe einer hydraulischen Axialkolbenmaschine, das heißt eines Hydraulikmotors oder einer Hydraulikpumpe.

Gemäß einer möglichen Ausgestaltung ist die innere Lagerschale durch genau zwei Niete am Schwenkelement gehalten. Die Niete sind vorzugsweise in nicht von den Wälzkörpern, insbesondere Nadeln oder Zylinderrollen, überrollten Bereichen der inneren Lagerschale angeordnet. Bei den Nieten handelt es sich vorzugsweise um Stahlniete. Alternativ ist Bronze, Messing oder eine sonstige Legierung zur Herstellung der Niete geeignet. Außer Vollnieten können auch sonstige Nietformen wie Hohlniete verwendet werden. Der Kopf des Niets, welcher die Lagerschale am Schwenkelement gegen Verdrehung sichert, ist vorzugsweise als Senkkopf ausgebildet. Das bündige Abschließen des Senkkopfes mit der Oberfläche der Lagerschale ermöglicht prinzipiell das Überrollen durch Wälzkörper.

Die Schwenkwiegenlagerung ist in folgenden Schritten herstellbar:
- Bereitstellung eines zwei Vertiefungen in einer gekrümmten Oberfläche aufweisenden Schwenkelementes, einer inneren Lagerschale, eines Gehäuses, einer äußeren Lagerschale, sowie eines Satzes an Wälzkörpern,
- Erzeugung von zwei Bohrungen in der inneren Lagerschale,
- Einsetzen eines Niets in jede Bohrung, das heißt Herstellung jeweils einer Nietverbindung,
- Aufsetzen der inneren Lagerschale einschließlich der mit dieser fest verbundenen Niete auf das Schwenkelement, so dass die Niete in die Vertiefungen im Schwenkelement eingreifen,
- Komplettierung der Anordnung aus Schwenkelement und innerer Lagerschale durch die Wälzkörper, die äußere Lagerschale und das Gehäuse zur Schwenkwiegenlagerung.

Bei den Vertiefungen, welche sich im Schwenkelement befinden, kann es sich entweder um Durchgangsbohrungen oder um Sacklochbohrungen handeln. Im letztgenannten Fall sind die Niete vorzugsweise derart in die Vertiefungen eingesetzt, dass zwar Verschiebungen der Lagerschale unterbunden werden, jedoch keine Sicherungsfunktion gegen Herausziehen der Niete aus den Vertiefungen gegeben ist. Dies ist beispielsweise dann gegeben, wenn der aus der Lagerschale herausragende Abschnitt eines Niets, das heißt der Nietfuß, ebenso eine zylindrische Form aufweist wie die zugehörige Vertiefung im Schwenkelement.

Allgemein bedeutet dies, dass eine formschlüssige Verbindung zwischen dem Niet und dem Schwenkelement bezüglich Belastungen, welche in einer zwischen das Schwenkelement und die innere Lagerschale gelegten Tangentialebene, insbesondere in Umfangsrichtung der im Wesentlichen streifenförmigen Lagerschale oder in Längsrichtung der Schwenkachse, wirken, gegeben ist, wobei zugleich der Niet in dessen Längsrichtung, das heißt normal zu der Tangentialebene, verschiebbar bleibt. Nietverbindungen existieren somit ausschließlich zwischen den Nieten und der inneren Lagerschale, nicht jedoch zwischen den Nieten und dem Schwenkelement.

Um die innere Lagerschale am Schwenkelement zu befestigen, ist die innere Lagerschale samt eingesetzter Niete etwas elastisch zu verformen. Sobald die Nietfüße in die Vertiefungen einschnappen, ist die innere Lagerschale gegen Verdrehen und Abfallen vom Schwenkelement gesichert und hierbei präzise positioniert. Im zusammengebauten Zustand der Schwenkwiegenlagerung ist ein Abheben der inneren Lagerschale vom Schwenkelement ohnehin ausgeschlossen. Jegliche Verlagerungen der inneren Lagerschale gegenüber dem Schwenkelement in Tangentialrichtung werden durch die Niete, insbesondere Stahlniete, unterbunden.

Die erforderliche elastische Verformung der inneren Lagerschale während der Montage ist auch in Ausführungsformen möglich, in welchen die innere Lagerschale einen Bord oder zwei Borde aufweist. Die Wälzkörper, insbesondere Nadeln oder Rollen, der Schwenkwiegenlagerung sind vorzugsweise in einem Käfig geführt. Was die Synchronisation des Wälzkörpersatzes und des Käfigs mit der Schwenkbewegung des Schwenkelements betrifft, sind verschiedenste prinzipiell bekannte Methoden der Synchronisation anwendbar. Beispielhaft wird in diesem Zusammenhang auf die Dokumente DE 10 2009 013 094 B4 und DE 34 42 391 C1 hingewiesen.

Zusätzlich zur inneren Lagerschale weist die Schwenkwiegenlagerung in typischer Ausgestaltung eine äußere Lagerschale auf, welche in das Gehäuse eingesetzt ist. Prinzipiell ist auch ein Abrollen der Wälzkörper direkt auf einer Oberfläche des Gehäuses möglich. Die Befestigung der äußeren Lagerschale am Gehäuse kann ebenfalls durch Vernietung oder auf sonstige Weise gegeben sein.

Die Bohrungen in der inneren Lagerschale, in welche die Niete einzusetzen sind, werden vorzugsweise im ungehärteten Zustand der inneren Lagerschale erzeugt. Nach dem Einbringen der Bohrungen kann ein Härten und Schleifen der inneren Lagerschale erfolgen. Erst im Anschluss werden die Niete in die innere Lagerschale eingesetzt, wobei eine starre, nicht mehr zerstörungsfrei lösbare Verbindung zwischen den Nieten und der Lagerschale hergestellt wird. Im Gegensatz zur Verbindung zwischen den Nieten und der inneren Lagerschale ist die Verbindung zwischen den Nieten und dem Schwenkelement, wie im Zusammenhang mit der Geometrie der Nietfüße beschrieben, lösbar. Das Anbringen der Niete an der inneren Lagerschale kann entweder manuell oder automatisiert erfolgen.

Nachfolgend werden mehrere Ausführungsbeispiele der Erfindung anhand einer Zeichnung näher erläutert. Hierin zeigen:
- Fig. 1 und 2: in Schnittdarstellungen ein erstes Ausführungsbeispiel einer Schwenkwiegenlagerung,
- Fig. 3: ausschnittsweise eine weitere Schwenkwiegenlagerung,
- Fig. 4: einzelne Komponenten der Anordnung nach Figur 3,
- Fig. 5: ein Detail der Anordnung nach Figur 4,
- Fig. 6: die Anordnung nach Figur 4 in einer weiteren Darstellung.

Die folgenden Erläuterungen beziehen sich, soweit nicht anders angegeben, auf beide Ausführungsbeispiele. Einander entsprechende oder prinzipiell gleichwirkende Teile sind in allen Figuren mit den gleichen Bezugszeichen gekennzeichnet.

Eine insgesamt mit dem Bezugszeichen 1 gekennzeichnete Schwenkwiegenlagerung umfasst ein Schwenkelement 2, welches in einem Gehäuse 3 mit Hilfe von Wälzkörpern 4, nämlich Nadeln oder Zylinderrollen, schwenkbar gelagert ist. Die Schwenkwiegenlagerung 1 ist in eine hydraulische Axialkolbenpumpe oder einen Axialkolbenmotor eingebaut. Durch Veränderung der Winkelstellung des Schwenkelements 2 gegenüber dem Gehäuse 3 ist in an sich bekannter Weise das Fördervolumen der Hydraulikpumpe beziehungsweise des Hydraulikmotors variierbar. Die Schwenkachse des auch als Schwenkwiege bezeichneten Schwenkelements 2 ist mit SW bezeichnet.

Eine innere Wälzfläche 5 für die Wälzkörper 4 ist durch eine innere Lagerschale 7 bereitgestellt, welche auf dem Schwenkelement 2 gehalten ist. Eine zugehörige, mit 6 bezeichnete äußere Wälzfläche ist durch eine in das Gehäuse 3 eingesetzte äußere Lagerschale 8 bereitgestellt. Die beiden Lagerschalen 7, 8 weisen in den Ausführungsbeispielen eine einheitliche Wandstärke W auf. Der Radius der inneren Wälzfläche 5 ist mit R₁, der Radius der äußeren Wälzfläche 6 mit R₂ bezeichnet.

Die Wälzkörper 4 sind in einem Käfig 9 geführt. Käfigstege sind mit 11 bezeichnet. Die Wälzflächen 5, 6 erstrecken sich in Umfangsrichtung über einen Winkel α, welcher größer ist als der mit β bezeichneten Winkel, über welchen sich der Käfig 9 erstreckt.

Nahe der Enden der insgesamt die Grundform eines gekrümmten Streifens aufweisenden inneren Lagerschale 7 befindet sich jeweils ein Niet 10, mit welchem die innere Lagerschale am Schwenkelement 2 derart gehalten ist, dass sie nicht in Umfangsrichtung der Lagerschale 7, das heißt in Schwenkrichtung, verschiebbar ist.

Bei den Nieten 10 handelt es sich um Stahlniete, welche jeweils einen zylindrischen, mit 13 bezeichneten Nietfuß aufweisen. Der Nietfuß 13 greift in eine ebenfalls zylindrische, allgemein als Vertiefung bezeichnete Sacklochbohrung 12 im Schwenkelement 2 ein.

Bevor die innere Lagerschale 7 an das Schwenkelement 2 angesetzt wird, werden die beiden Niete 10 fest mit der inneren Lagerschale 7 verbunden, das heißt vernietet. Zu diesem Zweck weist die innere Lagerschale 7 zwei Bohrungen 14 auf, welche bereits im ungehärteten Zustand der inneren Lagerschale 7 erzeugt werden. Jede Bohrung 14 weist einen zylindrischen Abschnitt 15 auf, an die sich nach außen ein konischer Abschnitt 16 anschließt. Der konische Abschnitt 16 ist zur Aufnahme eines Senkkopfes 17 des Niets 10 vorgesehen. Vor dem Einsetzen des Niets 10 in die Bohrung 14 unter Verformung des Senkkopfes 17 wird das innere Ringelement 7 einer Wärmebehandlung unterzogen, das heißt gehärtet, und geschliffen.

Die Baugruppe, welche die innere Lagerschale 7 und die beiden Niete 10 umfasst, wird bei der Montage der Schwenkwiegenlagerung 1 beim Ansetzen an das Schwenkelement 2 elastisch aufgebogen, bis die Nietfüße 13 in die Vertiefungen 12 einschnappen. In analoger Weise wäre auch ein späteres Abnehmen der genannten Baugruppe vom Schwenkelement 2 möglich. Aufgrund der Krümmung der inneren Lagerschale 7 ist diese mit Hilfe der Niete 10 für Montagezwecke und auch für den späteren Betrieb der Axialkolbenmaschine ausreichend fest am Schwenkelement 2 gehalten. Hierbei existiert keine Nietverbindung zwischen den Nietfüßen 13 und dem Schwenkelement 2.

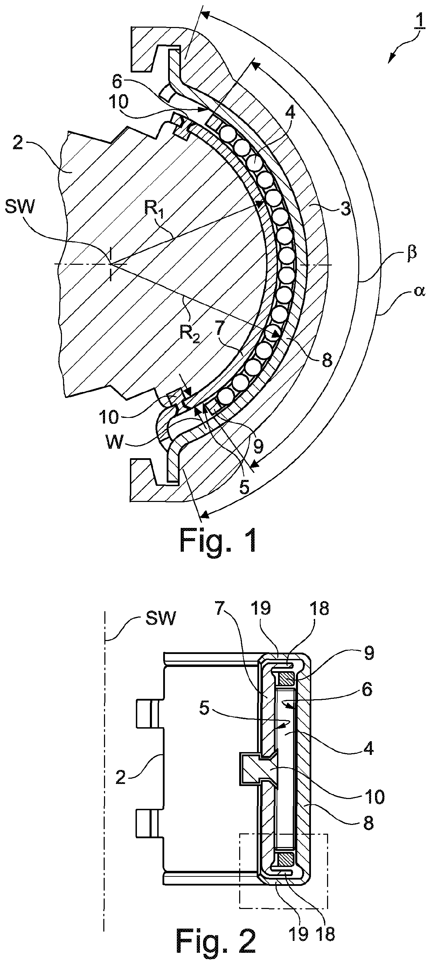

Im Ausführungsbeispiel nach den Figuren 1 und 2 weist die innere Lagerschale 7 zwei Borde 18 auf. Zwei Borde 19 der äußeren Lagerschale 8 sind in diesem Fall derart geformt, dass sie die innere Lagerschale 7 teilweise umgreifen, so dass durch die Lagerschalen 7, 8 eine unverlierbare Einheit gebildet ist. In der in Figur 2 dargestellten Anordnung ist ein Wälzkörper 4 direkt auf einem Niet 10 sichtbar. Tatsächlich wird ein Überrollen der Niete 10 durch die Wälzkörper 4 in bevorzugter Ausgestaltung vermieden.

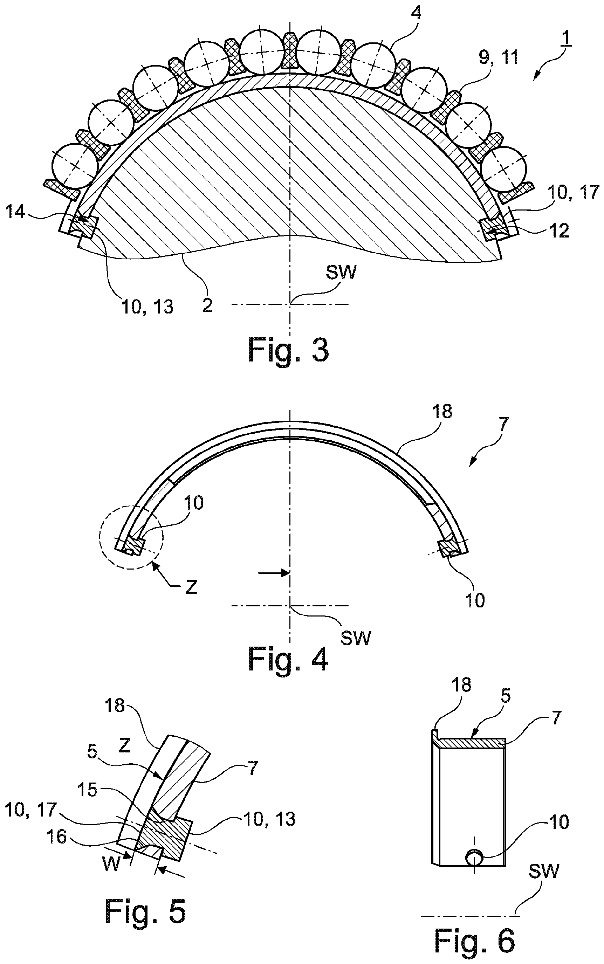

Auch im Ausführungsbeispiel nach den Figuren 3 bis 6 werden die Abschnitte der inneren Lagerschale 7, in welchen die Niete 10 angeordnet sind, vorzugsweise nicht zum Überrollen durch Wälzkörper 4 genutzt. Im Unterschied zum Ausführungsbeispiel nach den Figuren 1 und 2 weist die innere Lagerschale 7 im Ausführungsbeispiel nach den Figuren 3 bis 6 lediglich einen einzigen Bord 18 auf, wobei zwischen der Wälzfläche 5 und dem Bord 18 eine rillenförmige Vertiefung mit einem Übergangsradius gegeben ist. In beiden Ausführungsbeispielen ist die Bewegung des Käfigs 9 beim Betrieb der Schwenkwiegenlagerung 1 mit der Schwenkbewegung des Schwenkelementes 2 durch nicht dargestellte, an sich bekannte Mittel synchronisiert.

### Bezugszeichenliste

- 1: Schwenkwiegenlagerung
- 2: Schwenkelement
- 3: Gehäuse
- 4: Wälzkörper
- 5: innere Wälzfläche
- 6: äußere Wälzfläche
- 7: innere Lagerschale
- 8: äußere Lagerschale
- 9: Käfig
- 10: Niet
- 11: Käfigsteg
- 12: Vertiefung, Sacklochbohrung
- 13: Nietfuß
- 14: Bohrung
- 15: zylindrischer Abschnitt der Bohrung
- 16: konischer Abschnitt der Bohrung
- 17: Senkkopf
- 18: Bord der inneren Lagerschale
- 19: Bord der äußeren Lagerschale

- α, β: Winkel
- R₁, R₂: Radius
- SW: Schwenkachse
- W: Wandstärke

## Patentansprüche

1. Schwenkwiegenlagerung (1), mit einem Schwenkelement (2), welches in einem Gehäuse (3) schwenkbar gelagert ist, wobei eine innere Lagerschale (7), auf welcher Wälzkörper (4) abrollen, auf dem Schwenkelement (2) gehalten ist, **dadurch gekennzeichnet, dass** die innere Lagerschale (7) mit Nieten (10) am Schwenkelement (2) in Umfangsrichtung der Lagerschale (7) formschlüssig gehalten ist.

2. Schwenkwiegenlagerung (1) nach Anspruch 1, **dadurch gekennzeichnet, dass** die innere Lagerschale (7) durch zwei Niete (10) am Schwenkelement (2) gehalten ist.

3. Schwenkwiegenlagerung (1) nach Anspruch 2, **dadurch gekennzeichnet, dass** die Niete (10) in nicht von den Wälzkörpern (4) überrollten Bereichen der inneren Lagerschale (7) angeordnet sind.

4. Schwenkwiegenlagerung (1) nach einem der Ansprüche 1 bis 3, **dadurch gekennzeichnet, dass** jeder Niet (10) einen als Senkkopf (17) ausgebildeten Nietkopf aufweist.

5. Schwenkwiegenlagerung (1) nach einem der Ansprüche 1 bis 4, **dadurch gekennzeichnet, dass** die Niete (10) als Stahlniete ausgebildet sind.

6. Schwenkwiegenlagerung (1) nach einem der Ansprüche 1 bis 5, **dadurch gekennzeichnet, dass** die Niete (10) ausschließlich an der inneren Lagerschale (7), nicht jedoch am Schwenkelement (2), durch Nietverbindungen befestigt sind.

7. Schwenkwiegenlagerung (1) nach Anspruch 6, **dadurch gekennzeichnet, dass** die Niete (10) jeweils einen Nietfuß (13) aufweisen, welcher in Längsrichtung des Niets (10) verschiebbar in eine Vertiefung (12) in dem Schwenkelement (2) eingesteckt ist, wobei eine formschlüssige Verbindung zwischen dem Niet (10) und dem Schwenkelement (2) bezüglich Belastungen, welche in einer zwischen das Schwenkelement (2) und die innere Lagerschale (7) gelegten Tangentialebene wirken, gegeben ist.

8. Schwenkwiegenlagerung (1) nach einem der Ansprüche 1 bis 7, **dadurch gekennzeichnet, dass** die innere Lagerschale (7) einen einzigen Bord (18) aufweist.

9. Verfahren zur Herstellung einer Schwenkwiegenlagerung (1), mit folgenden Merkmalen:
- Bereitstellung eines zwei Vertiefungen (12) in einer gekrümmten Oberfläche aufweisenden Schwenkelementes (2), einer inneren Lagerschale (7), eines Gehäuses (3), einer äußeren Lagerschale (8), sowie eines Satzes an Wälzkörpern (4),
- Erzeugung von zwei Bohrungen (14) in der inneren Lagerschale (7),
- Einsetzen eines Niets (10) in jede Bohrung (14),
- Aufsetzen der inneren Lagerschale (7) auf das Schwenkelement, so dass die Niete (10) in die Vertiefungen (12) im Schwenkelement (2) eingreifen,
- Komplettierung der Anordnung aus Schwenkelement (2) und innerer Lagerschale (2) durch die Wälzkörper (4), die äußere Lagerschale (8) und das Gehäuse (3) zu einer Schwenkwiegenlagerung (1).

10. Verfahren nach Anspruch 9, **dadurch gekennzeichnet, dass** die innere Lagerschale (7) nach der Erzeugung der Bohrungen (14), vor dem Einsetzen der Niete (10), einer Wärmebehandlung unterzogen wird.

## Claims

1. A pivot cradle bearing (1), having a pivoting element (2) which is pivotably mounted in a housing (3), an inner bearing shell (7) which is rolled over by rolling elements (4) being held on the pivoting element (2), **characterised in that** the inner bearing shell (7) is held form-fittingly by rivets (10) on the pivoting element (2) in a circumferential direction of the bearing shell (7).

2. The pivot cradle bearing (1) according to claim 1, **characterised in that** the inner bearing shell (7) is held on the pivoting element (2) by two rivets (10).

3. The pivot cradle bearing (1) according to claim 2, **characterised in that** the rivets (10) are arranged in regions of the inner bearing shell (7) that are not rolled over by the rolling elements (4).

4. The pivot cradle bearing (1) according to any one of claims 1 to 3, **characterised in that** each rivet (10) has a rivet head formed as a countersunk head (17).

5. The pivot cradle bearing (1) according to any one of claims 1 to 4, **characterised in that** the rivets (10) are formed as steel rivets.

6. The pivot cradle bearing (1) according to any one of claims 1 to 5, **characterised in that** the rivets (10) are fastened exclusively to the inner bearing shell (7), but not to the pivoting element (2), by rivet connections.

7. The pivot cradle bearing (1) according to claim 6, **characterised in that** the rivets (10) each have a rivet foot (13) which is inserted displaceably in a longitudinal direction of the rivet (10) into a depression (12) in the pivoting element (2), a form-fitting connection being provided between the rivet (10) and the pivoting element (2) with respect to loads acting in a tangential plane positioned between the pivoting element (2) and the inner bearing shell (7).

8. The pivot cradle bearing (1) according to any one of claims 1 to 7, **characterised in that** the inner bearing shell (7) has a single rim (18).

9. A method for producing a pivot cradle bearing (1), having the following features:
- providing a pivoting element (2) having two depressions (12) in a curved surface thereof, an inner bearing shell (7), a housing (3), an outer bearing shell (8), and a set of rolling elements (4),
- creating two bores (14) in the inner bearing shell (7),
- inserting a rivet (10) into each bore (14),
- placing the inner bearing shell (7) onto the pivoting element so that the rivets (10) engage in the depressions (12) in the pivoting element (2),
- completing the arrangement of the pivoting element (2) and inner bearing shell (2) by the rolling elements (4), the outer bearing shell (8), and the housing (3) to form a pivot cradle bearing (1).

10. The method according to claim 9, **characterised in that** the inner bearing shell (7) is subjected to a heat treatment after the bores (14) have been created and before the rivets (10) are inserted.

## Revendications

1. Support de palier à berceaux pivotants (1), avec un élément pivotant (2), qui est logé de manière pivotante dans un boîtier (3), une coque de palier intérieure (7), sur laquelle roulent des corps de roulement (4), étant maintenue sur l'élément pivotant (2), **caractérisé en ce que** la coque de palier intérieure (7) est maintenue par complémentarité de forme avec des rivets (10) sur l'élément pivotant (2) dans la direction périphérique de la coque de palier (7).

2. Support de palier à berceaux pivotants (1) selon la revendication 1, **caractérisé en ce que** la coque de palier intérieure (7) est maintenue sur l'élément pivotant (2) par deux rivets (10).

3. Support de palier à berceaux pivotants (1) selon la revendication 2, **caractérisé en ce que** les rivets (10) sont disposés dans des zones de la coque de palier intérieure (7) qui ne sont pas recouvertes par les corps de roulement (4).

4. Support de palier à berceaux pivotants (1) selon l'une des revendications 1 à 3, **caractérisé en ce que** chaque rivet (10) présente une tête de rivet conçue comme une tête fraisée (17).

5. Support de palier à berceaux pivotants (1) selon l'une des revendications 1 à 4, **caractérisé en ce que** les rivets (10) sont des rivets en acier.

6. Support de palier à berceaux pivotants (1) selon l'une des revendications 1 à 5, **caractérisé en ce que** les rivets (10) sont fixés exclusivement à la coque de palier intérieure (7), mais pas à l'élément pivotant (2), par assemblages par rivets.

7. Support de palier à berceaux pivotants (1) selon la revendication 6, **caractérisé en ce que** les rivets (10) présentent chacun un pied de rivet (13) qui est inséré dans une concavité (12) dans l'élément pivotant (2) de manière à pouvoir être déplacé dans la direction longitudinale du rivet (10), une liaison par complémentarité de forme étant établie entre le rivet (10) et l'élément pivotant (2) par rapport à des charges qui agissent dans un plan tangentiel placé entre l'élément pivotant (2) et la coque de palier intérieure (7).

8. Support de palier à berceaux pivotants (1) selon l'une des revendications 1 à 7, **caractérisé en ce que** la coque de palier intérieure (7) comporte un seul rebord (18).

9. Procédé de fabrication d'un support de palier à berceaux pivotants (1) présentant les caractéristiques suivantes :
- préparation d'un élément pivotant (2) présentant deux concavités (12) dans une surface incurvée, d'une coque de palier intérieure (7), d'un boîtier (3), d'une coque de palier extérieure (8), ainsi que d'un jeu de corps de roulement (4),
- création de deux trous (14) dans la coque de palier intérieure (7),
- insertion d'un rivet (10) dans chaque trou (14),
- mise en place de la coque de palier intérieure (7) sur l'élément pivotant, de sorte que les rivets (10) s'insèrent dans les concavités (12) dans l'élément pivotant (2),
- finalisation de l'ensemble constitué de l'élément pivotant (2) et de la coque de palier intérieure (2) par les corps de roulement (4), la coque de palier extérieure (8) et le boîtier (3) pour former un support de palier à berceaux pivotants (1).

10. Procédé selon la revendication 9, **caractérisé en ce que** la coque de palier intérieure (7) est soumise à un traitement thermique après la création des trous (14) et avant l'insertion des rivets (10).
